# EUROPÄISCHE PATENTANMELDUNG

(11) **EP 1 415 940 A2**
(43) Veröffentlichungstag der Anmeldung: **06.05.2004**
(21) Anmeldenummer: 03024799.3
(22) Anmeldetag: 30.10.2003
(51) Int. Cl.: B65G 61/00

(54) **Vorrichtung für das Aufnehmen von Ladegut**

(30) Priorität: 31.10.2002 DE 10251181
(71) Anmelder: Meierhenrich, Dirk, 32760 Detmold (DE); Adrians, Gerhard, 32108 Bad Salzuflen (DE)
(72) Erfinder: Meierhenrich, Dirk, 32760 Detmold (DE); Adrians, Gerhard, 32108 Bad Salzuflen (DE)
(74) Vertreter: Brandt, Detlef, Dipl.-Ing.

(57) **Zusammenfassung**

Vorrichtung für das Aufnehmen von Ladegut (16,18), das beabstandet voneinander und/oder übereinander gelagert ist, die eine oberhalb der Ladegutanordnung angeordnete brückenartige, verfahrbare Rahmenkonstruktion (1) aufweist, an der eine gegenüber der Rahmenkonstruktion (1) verfahrbarer höhenverstellbarer Aufnahmevorrichtung (15) angeordnet ist, welche mit einer Fördereinrichtung (17) zum Transport des von Aufnahmevorrichtung abgestapelten Ladegutes zur nachfolgenden Bearbeitung auf Verteilstationen versehen ist.

## Beschreibung

Die Erfindung betrifft eine Vorrichtung für das Aufnehmen von Ladegut mit den im Gattungsbegriff des Anspruches 1 genannten Merkmalen.

Derartige Vorrichtungen sind prinzipiell aus dem Stand der Technik in unterschiedlicher Ausgestaltung bekannt und werden beispielsweise in Großmärkten, Versandhäusern, Brief- und Frachtzentren überall dort eingesetzt, wo sich regelmäßig das Problem stellt, Ladegut aufzunehmen, welches beispielsweise von mit diesem beladenen Paletten abzustapeln ist. Das Ladegut kann dabei die Form von Plastikkästen, Kartons, Holzkästen, durch Folie oder Papier gebundenen Einheiten oder vergleichbar vereinzelbarem, abgepackten Ladegut aufweisen. Oftmals stellt sich in den oben geschilderten Betrieben das Problem, dass sortenrein angelieferte Chargen von Ladegut gemischt umgepackt oder dass umgekehrt nicht sortenrein angeliefertes Ladegut sortiert werden muss.

Ausgehend von diesen technischen Rahmenbedingungen besteht die Aufgabe der Erfindung darin, eine Vorrichtung der eingangs beschriebenen Art bereitzustellen, bei der das Ladegut in kürzester Zeit aufgenommen und nachfolgenden Bearbeitungs- oder Verteilstationen zugeführt werden kann.

Diese Aufgabe wird in Zusammenschau mit den gattungsbildenden Merkmalen durch die im kennzeichnenden Teil des Anspruches 1 offenbarte technische Lehre gelöst.

Gemäß dieser technischen Lehre ist es erfindungswesentlich, dass die Vorrichtung eine oberhalb des Ladegutes angeordnete brückenartige, verfahrbare Rahmenkonstruktion aufweist, an der eine gegenüber der Rahmenkonstruktion verfahrbare, höhenverstellbare Aufnahmevorrichtung angeordnet ist, welche mit einer Fördereinrichtung zum Transport des von der Aufnahmevorrichtung aufgenommenen Ladegutes zu nachfolgenden Bearbeitungsund/oder Verteilstationen versehen ist.

Die durch die erfindungsgemäßen Merkmale beschriebene Konstruktion zeichnet sich durch eine hohe Flexibilität in Bezug auf die räumliche Anordnung des Ladegutes und deren Aufnahmefähigkeit aus. Das Ladegut kann direkt von LKW-Aufliegern aufgenommen werden oder von nebeneinander und/oder übergeordnet angeordneten Paletten. Sofern das Ladegut beispielsweise auf Paletten in Reihen nebeneinander angeordnet ist, kann die Anzahl der Reihen der Paletten durchaus mehr als 50 betragen. Entsprechend der Anzahl der in einer Reihe hintereinander angeordneten Paletten, beispielsweise zwischen 15 und 25, ist die Gesamtgröße der Rahmenkonstruktion zu bemessen, wobei davon ausgegangen wird, dass die Rahmenkonstruktion im Wesentlichen rechtwinklig zur Ausrichtung des Ladegutes bzw. der mit Ladegut beladenen Palettenreihen verfahrbar angeordnet ist.

Die Aufnahmevorrichtung ist an dieser Rahmenkonstruktion nach Art einer Laufkatze verfahrbar und höhenverstellbar angeordnet. Durch die Aufnahmevorrichtung kann das höhenmäßig oberste Ladegut erfasst und beispielsweise durch Anheben und Versetzen auf die weiter angeschlossene erste Fördervorrichtung abgesetzt werden.

Besondere Ausgestaltungen des Gegenstandes der Erfindung ergeben sich zusätzlich aus den in den Unteransprüchen offenbarten ergänzenden Merkmalen.

Prinzipiell bieten sich für die Ausbildung der Aufnahmevorrichtung unterschiedliche Möglichkeiten an, die wesentlich durch das Ladegut bestimmt sein können. Es hat sich insbesondere als vorteilhaft erwiesen, wenn die Aufnahmevorrichtung als Greifvorrichtung mit Hebemitteln gestaltet ist, welche das Ladegut stirnseitig anheben, so dass die Fördervorrichtung in den unter dem Ladegut entstandenen Spalt einfahren kann. Die Hebemittel können dabei als Backenkonstruktion ausgebildet sein, wobei die Tragbacken von den Seiten eine oberste Lage des Ladegutes zwischen sich einklemmen und auf die Fördervorrichtung umsetzen.

Eine andere Art der erfindungsgemäßen Gestaltung sieht vor, dass die Aufnahmevorrichtung ein Gestell mit einem umlaufenden Förderband aufweist, welches an seinem vorderen, den aufzunehmenden Paletten zugewandten Ende über eine feststehende Umlenkkante geführt ist. Zur Aufnahme des Ladegutes wird die vordere Umlenkkante an das Ladegut in Höhe des Spaltes zwischen oberstem Ladegut und darunter befindlichem Ladegut herangefahren und zur Anlage gebracht. Durch die spitze Gestaltung der Umlenkkante in Verbindung mit dem über die Umlenkkante geführten, in Bewegung befindlichen Förderband wird das oberste Ladegut leicht angehoben und auf das Förderband der Aufnahmevorrichtung gezogen. Vom Förderband der Aufnahmevorrichtung wird anschließend das aufgenommene Ladegut an die angeschlossene Fördervorrichtung übergeben.

Durch die letztgenannte Gestaltung der Aufnahmevorrichtung lassen sich insbesondere schwierig zu händelnde Waren wie Obst aufnehmen, welches in der Regel in nach oben offenen Kisten oder Kartons abgepackt ist. Darüberhinaus ist beim genannten System von Vorteil, dass die Aufnahmevorrichtung sich nicht an der Geometrie des Ladegutes orientieren muss.

Es hat sich bei der zuletzt geschilderten Ausgestaltung zusätzlich als zweckmäßig erwiesen, wenn die Umlenkkante über die Breite des Förderbandes mit einer Mehrzahl von Laufrollen versehen ist. Durch diese konstruktive Gestattung wird die Reibung des Förderbandes im Bereich der Umlenkkante so weit herabgesetzt, dass ein erhöhter Verschleiß des Förderbandes an seiner Innenseite ausgeschlossen ist.

Darüber hinaus kann - entsprechend einer weiteren vorteilhaften Ausgestaltung - das Förderband der Aufnahmevorrichtung Bestandteil der Fördervorrichtung zum Abtransport des abgestapelten Ladegutes sein. Durch diese Gestaltung bilden Aufnahmevorrichtung und Fördervorrichtung eine kompakte Baueinheit, bei der in Bezug auf Antriebe und Steuerungen signifikante Einsparungen gegenüber einer getrennten Ausführung von Fördervorrichtung und Aufnahmevorrichtung möglich sind.

Den beiden beschriebenen besonderen Ausgestaltungsformen der Aufnahmevorrichtung in Form einer Greiferkonstruktion oder in Form des um eine Umlenkkante laufenden Förderbandes ist gemeinsam, dass das Ladegut stimseitig angehoben wird, und dass dann die Fördervorrichtung bzw. die Aufnahmevorrichtung in den unter dem Ladegut entstandenen Spalt einfahren kann.

Die in den Spalt eingefahrene Fördervorrichtung, bevorzugt als Gurtförderer oder als Rollenförderer ausgebildet, befördert das Ladegut dann vereinzelt oder lagenweise - abhängig vom Anheben durch die Aufnahmevorrichtung - an die nachgeschalteten Stationen weiter. Die Fördervorrichtung ist mit der Aufnahmevorrichtung entsprechend einer bevorzugten Ausgestaltung gekoppelt, wodurch das dem Ladegut zugewandte Ende der Fördervorrichtung auch höhenverstellbar ist. Entsprechend einer zweckmäßigen Weiterbildung des Erfindungsgedankens ist diese höhenverstellbare Fördervorrichtung an ihrem, der Aufnahmevorrichtung abgewandten freien anderen Ende, an eine höhenfeste zweite Fördervorrichtung angeschlossen.

Diese zweite Fördervorrichtung kann entsprechend einer vorteilhaften Weiterbildung rechtwinklig zu der ersten Fördervorrichtung ausgerichtet sein. Darüber hinaus hat es sich als vorteilhaft erwiesen, die zweite Fördervorrichtung in Form eines Paternosteraufzuges zu gestalten, um Ladegut aus unterschiedlichen Höhenpositionen am zugewandten Ende der ersten Fördervorrichtung abnehmen zu können.

Es kann dann vorgesehen werden, dass die zweite höhenfeste Fördervorrichtung, wiederum als Gurt- oder Rollenförderer oder dgl. ausgebildet, unabhängig von der Rahmenkonstruktion der erfindungsgemäßen Vorrichtung das Ladegut einer weiteren Station wie einer Sortiervorrichtung, ein Magazin oder dgl. zuführt, wenn die erste Fördervorrichtung für einen entsprechenden Längenausgleich zwischen dieser zweiten Fördervorrichtung und der Aufnahmevorrichtung bei deren Verfahren an der Rahmenkonstruktion ausgelegt ist.

Je nach örtlichen Gegebenheiten kann die zweite, höhenfeste Fördervorrichtung fest an der Rahmenkonstruktion und vergleichsweise kurz ausgebildet werden. Diese zweite Fördervorrichtung setzt dann die Ladung bevorzugt auf eine dritte Fördervorrichtung um, an die die zweite Fördervorrichtung angeschlossen ist, wobei die Förderrichtung der dritten Fördervorrichtung parallel zu den ggf. reihenweise angeordneten Paletten orientiert ist und ebenfalls an der Rahmenkonstruktion ortsfest angeordnet ist.

Aufgrund der durch die verschiedenen Fördervorrichtungen festgelegten Richtungswechsel kann eine Vereinzelung des Ladegutes erfolgen, wenn eine aus mehreren Kartons, Ballen oder dgl. bestehende oberste Lage von der Aufnahmevorrichtung auf die erste Fördervorrichtung umgesetzt und über die zweite Fördervorrichtung an die dritte Fördervorrichtung weitergegeben wird.

Entsprechend einer weiteren vorteilhaften Ausgestaltung der Erfindung kann die dritte Fördervorrichtung an eine vierte Fördervorrichtung angeschlossen sein, die beabstandet vor einer Stirnseite in der Reihe der Paletten geordnet ist. Diese vierte Fördervorrichtung ist unabhängig von der Brückenkonstruktion und führt das nunmehr vereinzelte Ladegut weiteren Bearbeitungsstationen zu.

Für die Ausgestaltung der Fördervorrichtungen bieten sich entsprechend der Art des Ladegutes Rollenförderer, Gurtförderer und ggf. auch Kettenförderer an, die weitestgehend aus dem Stand der Technik bekannt sind. Für die erste Transportvorrichtung hat sich allerdings die Ausgestaltung als Gurtförderer als vorteilhaft erwiesen, da aufgrund der Höhenverstellbarkeit der Aufnahmevorrichtung das Ladegut regelmäßig ein schiefe Ebene hinauf transportiert werden muss. Dies ergibt sich aus der Tatsache, dass die zweite und insbesondere die dritte Fördervorrichtung in der Regel oberhalb der höchsten Ebene des gestapelten Ladegutes angeordnet sind, damit die Reihe der neben- oder hintereinander angeordneten Paletten überfahren werden kann.

Es kann darüber hinaus vorgesehen sein, insbesondere bei wechselnden Größen des Ladegutes, die Aufnahmevorrichtung manuell zu steuern, wozu zweckmäßigerweise die Aufnahmevorrichtung einen Führerstand aufweist. Zur besseren Beobachtung des Aufnahmevorganges durch die Aufnahmevorrichtung sollte dieser Führerstand oberhalb der Aufnahmevorrichtung angeordnet sein. Natürlich sind, insbesondere bei Verwendung moderner Übertragungstechniken wie Video- oder Digitalkameras, auch andere Standorte des Führerstandes denkbar, sofern dies im Rahmen der Gesamtkonstruktion sinnvoll erscheint.

Es ist darüber hinaus natürlich denkbar, den Gesamtfunktionsablauf der Vorrichtung von der Aufnahme des Ladegutes über den Transport bis hin zur Übergabe an eine nachgeschaltete Verteilstation sowie auch das Positionieren der Rahmenkonstruktion und der Aufnahmevorrichtung durch entsprechende Steuer- und Regelvorrichtungen ohne Bedienpersonal zu steuern.

Im Folgenden wird ein Ausführungsbeispiel des Gegenstandes der Erfindung anhand der beigefügten Zeichnungen näher erläutert. Es zeigt:
- Fig. 1: eine Seitenansicht einer Vorrichtung entsprechend dem Gegenstand der Erfindung,
- Fig. 2: einen Abstapelvorgang einer untersten Lage eines Ladegutes in einer der Figur 1 entsprechenden Seitenansicht,
- Fig. 3: eine Draufsicht auf die in den Figuren 1 und 2 dargestellte Vorrichtung und
- Fig. 4: eine spezielle Ausgestaltungsvariante der Aufnahmevorrichtung in Form eines um eine Umlenkkante laufenden Förderbandes entsprechend des Details B aus Figur 2.

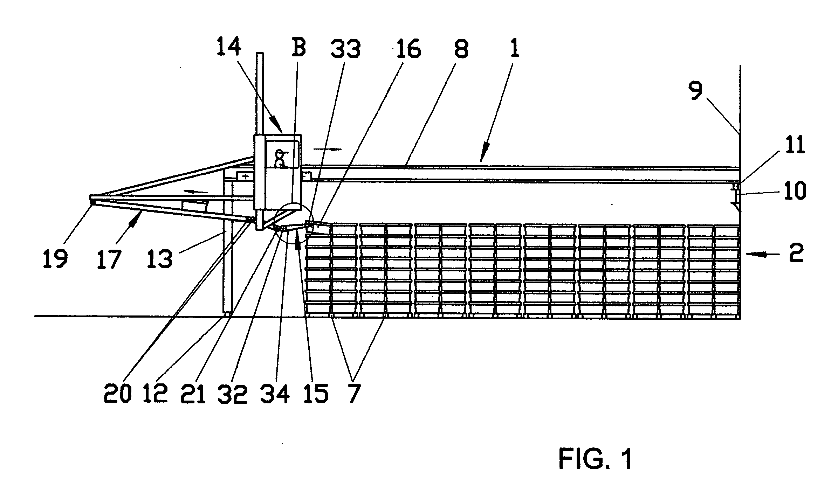

Die in den Figuren 1 bis 3 gezeigte erfindungsgemäße Vorrichtung weist eine Rahmenkonstruktion 1 auf, welcher aus einer Brücke 8 und einer senkrechten Stütze 13 aufgebaut ist. Im gezeigten Ausführungsbeispiel ist die Brücke 8 einseitig an einer Wand 9 auf einem wandfesten Träger 10, verfahrbar auf Rollen 11, abgestützt. Auf der der Wandbefestigung gegenüber liegenden Seite stützt sich die Brücke 8 über die senkrechte Stütze 13 auf einem bodenfesten, weiter nicht dargestellten Gleitsystem ab, wobei die Verfahrbarkeit von Stütze 13 und Brücke 8 über Rollen 12 gewährleistet ist. Alternativ zu der wandseitigen Halterung kann jedoch auch eine zweite senkrechte Stütze vorgesehen sein, so dass die Rahmenkonstruktion 1 insgesamt die Form eines nach unten offenen U bildet. Darüberhinaus kann die Brücke 8 auch an einer ausreichend stabilen Deckenkonstruktion als schwebende Konstruktion aufgehängt sein.

Unterhalb der Brückenkonstruktion ist in der Abbildung beispielhaft eine Anordnung von neben- und hintereinander angeordneten Paletten 7 dargestellt, wobei die Palettenreihen der Deutlichkeit halber von 2 bis 6 nummeriert sind. Somit überspannt die Brücke 8 der Rahmenkonstruktion 1 im dargestellten Ausführungsbeispiel 8 Paletten 7 in jeweils einer der Reihen 2 bis 6, wobei die Anzahl der Paletten 7 in jeweils einer der Reihen 2 bis 6 bei entsprechender Länge der Brücke 8 durchaus variieren kann.

An der Rahmenkonstruktion 1 ist, wie aus der Abbildung ersichtlich, eine in ihrer Gesamtheit mit 15 bezeichnete Aufnahmevorrichtung angeordnet. Diese Aufnahmevorrichtung 15 ist in Form einer Laufkatze ausgeführt und kann somit in Verbindung mit der Rahmenkonstruktion 1 sämtliche Bereiche des gestapelten Ladegutes problemlos überstreichen und die jeweils oberste Lage des Ladegutes problemlos aufnehmen.

Im dargestellten Ausführungsbeispiel besteht die Aufnahmevorrichtung 15 aus einer in einem nicht näher dargestellten Gestell aufgenommenen Führungsrolle 32 und einer feststehenden Umlaufkante 33, über die gemeinsam ein Förderband 34 geführt ist.

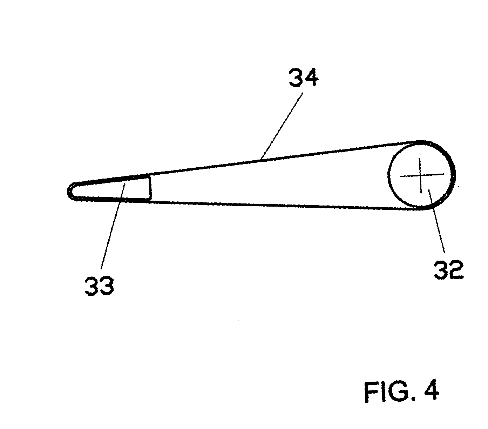

Aus der Figur 4 wird die Konstruktion der Aufnahmevorrichtung in ihrer speziellen Form nochmals deutlich. Die vordere Umlaufkante 33 kann über die Breite des Förderbandes 34 eine Mehrzahl von Umlenkrollen aufweisen, welche geringfügig über die Oberfläche der Umlenkkante 33 hervorstehen. Auf diese Weise wird das Förderband 34 bezüglich bestehender Reibungsverluste weniger beansprucht und unterliegt deswegen an seiner Innenseite einem geringeren Verschleiß.

An seiner mit der Führungsrolle 32 versehenen Hinterkante des umlaufenden Förderbandes 24 schließt sich über ein Gelenk 21 in Form einer Umlenkrolle eine Fördereinrichtung 17 an, welche die durch die Aufnahmevorrichtung auf das Förderband 34 aufgelegten Ladegüter nachgeschalteten Stationen zuführt. Natürlich besteht alternativ zu der beschriebenen Ausführungsform der Aufnahmevorrichtung auch die Möglichkeit, die Aufnahmevorrichtung 15 in hier nicht näher dargestellter und an sich bekannter Weise mit Greifarmen auszustatten, über die die der Aufnahmevorrichtung 15 zugewandte Vorderkante des jeweils obersten Ladegutes 16, 18 leicht angehoben werden kann, so dass der Vorderbereich des Förderbandes 34 in dem entstehenden Spalt zwischen oberstem Ladegut 18 und darunter befindlichem Ladegut einfahren kann. Ist eine derartige zusätzliche Greifvorrichtung vorhanden, so ist es nicht zwingend notwendig, das Förderband 34 über eine wie in der Figur 4 dargestellte Umlaufkante 33 zu führen. In diesem Falle reicht es aus, wenn am vorderen Ende des Förderbandes 34 eine herkömmliche Umlenkrolle vorhanden ist.

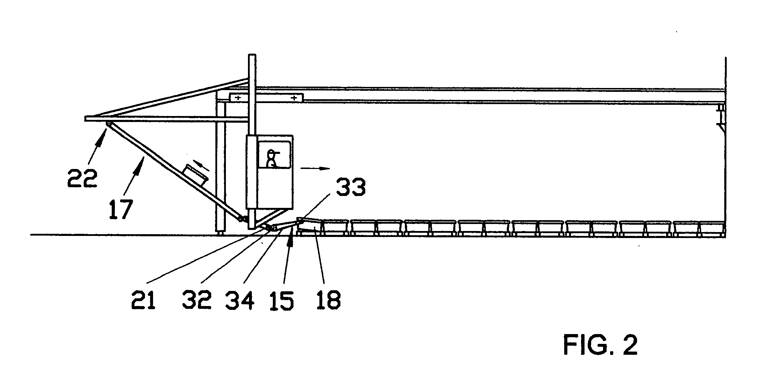

Um die unterschiedliche Höhenpositionierung der Aufnahmevorrichtung 15, beispielsweise bei einem obersten Ladegut 16 in Figur 1 oder bei einem untersten, abzustapelnden Ladegut 18 gemäß Figur 2 auszugleichen, weist die Fördervorrichtung 17 Gelenke 19, 20 und 21 auf, die den Höhenversatz ausgleichen, so dass das in den Zeichnungen auf der linken Seite dargestellte Ende 22 der Fördervorrichtung 17 höhenfest verbleiben kann.

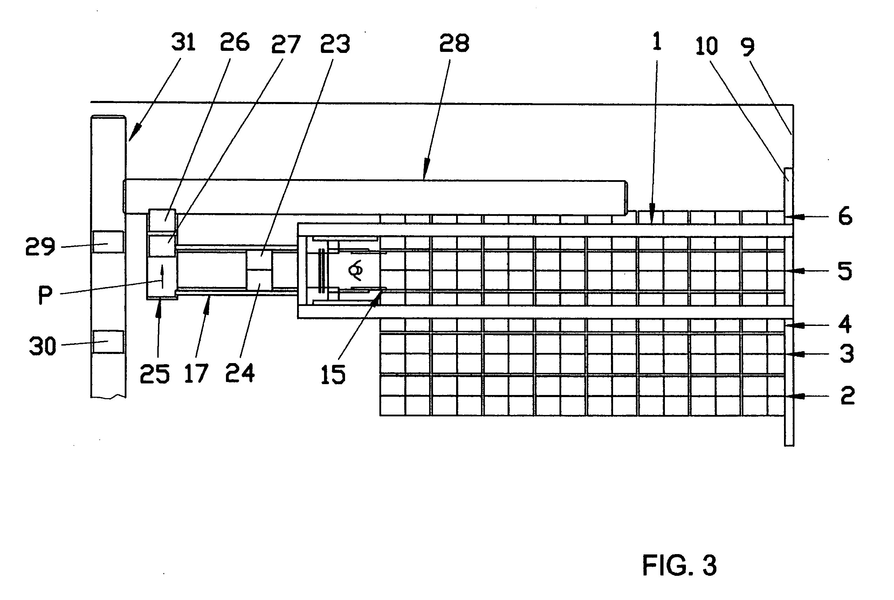

Die Draufsicht gemäß der Figur 3 zeigt, dass durch die Aufnahmevorrichtung 15 Ladegut lagenweise abgestapelt wird. Eine derartige Lage von hier zwei Ladegütem 23, 24 nebeneinander, wird gemäß der Figur 3 auf der Fördervorrichtung 17 einer zweiten Fördervorrichtung 25 zugeführt, die mit der Aufnahmevorrichtung 15, der ersten Fördervorrichtung 17 an der Brücke 8 verfahrbar ist. Im Gegensatz zu den letztgenannten Bauelementen ist die Fördervorrichtung 25 jedoch höhenfest und oberhalb des höchsten Lademaßes des Ladegutes ausgebildet. Die durch einen Pfeil P dargestellte Förderrichtung der zweiten Fördervorrichtung 25 verläuft rechtwinklig zu der der ersten Fördervorrichtung 17. Die zweite Fördervorrichtung 25 übergibt das Ladegut 26, 27 an eine dritte, an der Rahmenkonstruktion 1 höhenfest angeordnete Fördervorrichtung 28, die wie die zweite Fördervorrichtung 25, oberhalb des höchsten Lademaßes einer Palette 7 angeordnet ist. Die Länge der Fördervorrichtung 28 ist so bemessen, dass über die gesamte Länge der Reihen 2 bis 6 der aufgestapelten Paletten 7 von der zweiten Fördervorrichtung 25 Ladegut 26, 27 an die dritte Fördervorrichtung 28 übergeben werden kann. Dementsprechend braucht in dieser Ausgestaltung durch die erste Fördervorrichtung 17 lediglich ein Versatz durch eine Höhenverstellung berücksichtigt zu werden.

Durch die Wechsel der Fördervorrichtung übergibt die dritte Fördervorrichtung 28 dann Ladegut 29, 30 an eine vierte Fördervorrichtung 31, die beabstandet von einer Stirnseite der Reihen 2 bis 6 der Paletten 7 rahmenkonstruktionsunabhängig angeordnet ist. Auf dieser vierten Fördervorrichtung 31 wird dann das vereinzelte Ladegut 29, 30 nachgeschalteten Verteil- oder Bearbeitungsstationen zugeführt.

Den Darstellungen der Figur 1 bis 3 ist darüber hinaus zu entnehmen, dass an der Aufnahmevorrichtung zusätzlich ein Führerstand 14 angeordnet ist, dessen Position so gewählt ist, dass er oberhalb der Aufnahmevorrichtung dem zugehörigen Bedienpersonal erlaubt, den Aufnahmevorgang an der Vorderkante der Aufnahmevorrichtung zu überwachen. Natürlich kann die Fahrerkabine ggf. auch an anderen Positionen angeordnet werden.

Darüber hinaus ist es denkbar, bei standardisierten Ladegutgrößen mittels entsprechender Steuer- und Regelungselektronik sowie geeigneter Abtast- und Überwachungseinrichtungen eine weit gehende Automatisierung des Abstapelvorganges durch die erfindungsgemäße Vorrichtung vorzunehmen.

### Bezugszeichenliste

- 1.: Rahmenkonstruktion
- 2.: Reihe 2
- 3.: Reihe 3
- 4.: Reihe 4
- 5.: Reihe 5
- 6.: Reihe 6
- 7.: Palette
- 8.: Brücke
- 9.: Wand
- 10.: Träger
- 11.: Rolle
- 12.: Rolle
- 13.: Stütze
- 14.: Führerstand
- 15.: Aufnahmevorrichtung
- 16.: Ladegut
- 17.: erste Fördervorrichtung
- 18.: Ladegut
- 19.: Gelenk
- 20.: Gelenk
- 21.: Gelenk
- 22.: Ende
- 23.: Ladegut
- 24.: Ladegut
- 25.: zweite Fördervorrichtung
- 26.: Ladegut
- 27.: Ladegut
- 28.: dritte Fördervorrichtung
- 29.: Ladegut
- 30.: Ladegut
- 31.: vierte Fördervorrichtung
- 32.: Führungsrolle
- 33.: Umlenkkante
- 34.: Förderband

## Patentansprüche

1. Vorrichtung für das Aufnehmen von Ladegut, das beabstandet voreinander und/oder übereinander gelagert ist,
**dadurch gekennzeichnet, dass**
die Vorrichtung eine oberhalb der Ladegutanordnung (2-6) angeordnete brückenartige, verfahrbare Rahmenkonstruktion (1) aufweist, an der eine gegenüber der Rahmenkonstruktion (1) verfahrbare, höhenverstellbare Aufnahmevorrichtung (15) angeordnet ist, welche mit einer Fördervorrichtung (17) zum Transport des von der Aufnahmevorrichtung (15) abgestapelten Ladegutes (16, 18) zu nachfolgenden Bearbeitungsund/oder Verteilstationen versehen ist.

2. Vorrichtung nach Anspruch 1,
**dadurch gekennzeichnet, dass**
die Aufnahmevorrichtung (15) als Greifvorrichtung mit Hebemitteln gestaltet ist, welche das Ladegut (16, 18) stirnseitig anhebt, so dass die Fördervorrichtung (17) in den unter dem Ladegut (16, 18) entstandenen Spalt einfahren kann.

3. Vorrichtung nach Anspruch 1,
**dadurch gekennzeichnet,**
**dass** die Aufnahmevorrichtung (15) ein Gestell mit umlaufendem Förderband (34) aufweist, welches an seinen vorderen, den aufzunehmenden Paletten zugewandten Ende über die feststehende Umlenkkante (33) geführt ist.

4. Vorrichtung nach Anspruch 3,
**dadurch gekennzeichnet, dass**
das Förderband (34) in der Aufnahmevorrichtung (15) Bestandteil der Fördervorrichtung (17) zum Abtransport des abgestapelten Ladegutes (16, 18) ist.

5. Vorrichtung nach einem der Ansprüche 3 oder 4,
**dadurch gekennzeichnet, dass**
die Umlenkkante (33) über die Breite des Förderbandes (34) mit einer Mehrzahl von Laufrollen versehen ist.

6. Vorrichtung nach Anspruch 5,
**dadurch gekennzeichnet, dass**
die Umlenkrollen mit ihrem Außendurchmesser geringfügig über die Oberfläche der Umlenkkante (33) vorstehen.

7. Vorrichtung nach einem oder mehreren der vorangegangenen Ansprüche,
**dadurch gekennzeichnet, dass**
die an die Aufnahmevorrichtung (15) angeschlossene Fördervorrichtung (17) an ihrem der Aufnahmevorrichtung (15) abgewandten freien anderen Ende (22) an eine höhenfeste zweite Fördervorrichtung (25) angeschlossen ist.

8. Vorrichtung nach einem oder mehreren der vorangehenden Ansprüche,
**dadurch gekennzeichnet, dass**
die erste Fördervorrichtung (17) wenigstens ein Gelenk (19, 20, 21) aufweist.

9. Vorrichtung nach einem oder mehreren der vorangehenden Ansprüche,
**dadurch gekennzeichnet, dass**
die Förderrichtung der zweiten Fördervorrichtung (25) im Wesentlichen rechtwinklig zu der der ersten Fördervorrichtung (17) ausgerichtet ist.

10. Vorrichtung nach einem oder mehreren der vorangehenden Ansprüche,
**dadurch gekennzeichnet, dass**
die zweite Fördervorrichtung (25) an eine dritte Fördervorrichtung (28) angeschlossen ist, deren Förderrichtung parallel zu den Reihen (2-6) der aufgestapelten Paletten (7) orientiert ist.

11. Vorrichtung nach einem oder mehreren der vorangehenden Ansprüche,
**dadurch gekennzeichnet, dass**
die dritte Fördervorrichtung (28) an eine vierte Fördervorrichtung (31) angeschlossen ist, die beabstandet vor einer Stirnseite der Paletten (7) angeordnet ist.

12. Vorrichtung nach einem oder mehreren der vorangehenden Ansprüche,
**dadurch gekennzeichnet, dass**
die Aufnahmevorrichtung (15) einen Führerstand (14) aufweist.

13. Vorrichtung nach Anspruch 12,
**dadurch gekennzeichnet, dass**
der Führerstand (14) oberhalb der Aufnahmevorrichtung (15) angeordnet ist.

14. Vorrichtung nach einem oder mehreren der vorangehenden Ansprüche,
**gekennzeichnet durch**
einen automatisierten Funktionsablauf.
